(19)

Europäisches Patentamt
European Patent Office
Office européen des brevets

(11) **EP 2 544 420 A1**

(12) **EUROPEAN PATENT APPLICATION**

(43) Date of publication:
**09.01.2013 Bulletin 2013/02**

(51) Int Cl.:
***H04L 25/02*** (2006.01)

(21) Application number: **11305871.3**

(22) Date of filing: **07.07.2011**

<table>
<tr><td>

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **Doetsch, Uwe
74392 Freudental (DE)**

</td><td>

• **Wild, Thorsten
70435 Stuttgart (DE)**

(74) Representative: **Wetzel, Emmanuelle et al
Alcatel-Lucent Deutschland AG
Intellectual Property & Corporate Standards
Lorenzstrasse 10
70435 Stuttgart (DE)**

Remarks:
Amended claims in accordance with Rule 137(2) EPC.

</td></tr>
</table>

(54) **Method for transmitting data in a communication system, first network node and second network node thereof**

(57)    The invention relates to a method (MET1) for transmitting data in a communication system. The communication system comprises a first network node (BS1). The method comprises the steps of transmitting (M1/14) from the first network node (BS1) to a second network node (MS) during a first time interval first data unit and first reference signals (RS1) related to the first data unit (DU1), transmitting (M1/17) from the first network node (BS1 to the second network node (MS) during at least one second time interval at least one second data unit (DU2) and at least second reference signals (RS2) related to the at least one second data unit (DU2), determining (M1/20) at the second network node (MS) for a transmission channel between the first network node (BS1) and the second network node (MS) a channel estimation based on the first reference signals (RS1) and based on the at least one second reference signals (RS2), and recovering (M1/21) at the second network node (MS) the first data unit (DU1) and the at least one second data unit (DU2) based on the channel estimation. The invention further relates to a first network node (BS1) and to a second network node (MS).

FIG. 2

EP 2 544 420 A1

Printed by Jouve, 75001 PARIS (FR)

# Description

## FIELD OF THE INVENTION

The invention relates to data communication and, more particularly but not exclusively, to channel estimation in a radio communication system.

## BACKGROUND

If a signal is transmitted from a transmitter, several effects such as scattering, fading and/or power decay may have an impact on the transmitted signal at a location of a receiver. Channel state information (CSI = channel state information) describes how the signal has propagated from the transmitter to the receiver. CSI needs to be known at the receiver to recover data error-free from the received signals and needs to be known at the transmitter to adapt and optimize a transmission of further signals from the transmitter to the receiver to current channel conditions. CSI is crucial for achieving a reliable communication between the transmitter and the receiver or between a transmitter system comprising several transmitters and the receiver especially for high data rates in multi-antenna systems such as applied by CoMP systems (CoMP = cooperative multipoint). Short-term knowledge of a current channel condition is a so-called instantaneous CSI. An acquisition of the instantaneous CSI is limited by how fast the channel conditions are changing. In fast fading systems, where channel conditions vary rapidly between successive transmissions of two single information symbols only a so-called statistical CSI can be applied. The statistical CSI may provide information of a type of fading distribution, of an average channel gain, of a line-of-sight component, and/or of a spatial correlation. Practical communication systems usually apply a mixture of the instantaneous CSI and the statistical CSI.

The instantaneous CSI is usually determined at the receiver by applying a measurement on a so-called training sequence or pilot sequence transmitted by the transmitter or by the transmitter system, where it is known to the receiver how the training sequence or the pilot sequence is transmitted from the transmitter or the transmitter system and by estimating a channel vector or a channel matrix using the combined knowledge of the training sequence or the pilot sequence as transmitted at the transmitter or at the transmitter system and of the training sequence or the pilot sequence as received at the receiver.

## SUMMARY

The way of transmitting data from a transmitter or a transmitter system to a receiver and the way of performing channel estimation at the receiver affects a spectral efficiency and an overall data rate of a communication system.

Therefore, it is an object of the invention to improve the spectral efficiency and the overall data rate of the communication system.

The object is achieved by a method for transmitting data in a communication system. The communication system comprises a first network node. The method comprises the steps of transmitting from the first network node to a second network node during a first time interval a first data unit and first reference signals related to the first data unit, transmitting from the first network node to the second network node during at least one second time interval temporally after the first time interval at least one second data unit and at least second reference signals related to the at least one second data unit, determining at the second network node for a transmission channel between the first network node and the second network node a channel estimation based on the first reference signals and based on the at least one second reference signals and recovering at the second network node the first data unit and the at least one second data unit based on the channel estimation. Preferably, the determining step is based on a temporal filtering or a temporal averaging over the first time interval and the at least one second time interval.

The object is further achieved by a first network node such as a base station and by a second network node such as a mobile station.

The method according to the present invention offers a benefit of improving a spectral efficiency of the transmission channel between the first network node and the second network node especially if the second network node is in a worse SINR condition (SINR = signal-to-interference and noise ratio) such as in a case, if a mobile station is located at the edge between two radio cells. The improvement can be achieved because the channel estimation is not so much impacted by short-term effects such as fast fading effects and therefore an accuracy of the channel estimation can be increased. By applying the method to further transmission channels between further first network nodes and further second network nodes an overall data rate of the communication system can be increased without requiring further radio resources. Additionally, due to more accurate channel estimation, a link adaptation can potentially select higher modulation and coding schemes, further increasing the data rates in the system. The present invention already provides an improvement in a channel estimation, if adjacent frequency resources in a predefined range are applied for the transmission of the first data unit and the at least one further transmission of the at least one second data unit and if a spectral coherence exists between these frequency resources. This further allows recovering at least two data units with one single channel estimation instead of recovering each data unit with separate channel estimations. Furthermore, the second network node may transmit a combined single positive acknowledgement, if the first data unit and the at least one second data unit have been recovered error-free or the second network node may transmit a combined single negative acknowledgement, if the first data unit and the at least one second data unit have been not recovered error-free. This allows reducing signaling traffic from the second network node to the first network node.

According to a preferred embodiment, the method further comprises the step of transmitting from the first network node to the second network node first information and the first information instructs the second network node to execute said determining step and the recovering step. The transmission of the first information instructs the second network node, that the next transmissions of data units can be used at the second network node to determine an overall channel estimation for these data units and informs the second network node that an immediate reception of a positive or a negative acknowledgement for each data unit is not expected by the first network node. If the first information is not transmitted from the first network node to the second network node, the first network node expects a common processing at the second network node by immediately performing channel estimation and a data recovery after receiving a single data unit.

According to a further preferred embodiment, the first data unit and the at least one second data unit are transmitted on a same frequency resource such as a PRB (PRB = physical resource block) of 12 adjacent subcarriers and a time length of 0.5 ms as applied in 3GPP LTE (3GPP = Third Generation Partnership Project; LTE = Long Term Evolution). In such a case the spectral coherence between adjacent frequency resources is not a problem and therefore can be neglected. Thereby, the channel estimation is even more reliable. Furthermore, the receiver at the second network node does not need to tune between the reception of the first data unit and the at least one second data unit, which allows for a shorter sequence of the transmission of the first data unit and the at least one second data unit.

In an even further preferred embodiment, the first information comprises an indication of the same frequency resource for the first time interval and the at least one time interval. Thereby, signaling resources for indicating the frequency resource can be reduced.

In an even further preferred embodiment, the communication system further comprises a third network node and the method further comprises the steps of receiving second information at the first network node from the third network node, the second information indicates an utilization of radio resources at the third network node for the first time interval and the at least one second time interval, and transmitting the second information from the first network node to the second network node. This even further preferred embodiment provides the benefit of informing the second network node about resource allocations at a neighbouring network node of the first network node. The second network node can use the second information to improve an accuracy of estimating the properties of the interference (e.g. interference power, spatial covariance etc.) and to improve thereby the channel estimation.

If spatial beamforming is applied in the communication system in a further embodiment the third network node may comprises an antenna array and the second information further indicates an utilization of same precoding weights applied to the antenna array for the same frequency resource and for the first time interval and the at least one second time interval. The further embodiment allows to provide to the second network node the information, that directional interference from the third network node will not change during the first time interval and the at least one second time interval.

According to a further preferred embodiment, the first data unit and the at least one second data unit are transmitted in a single transport block comprising a single MAC header. The further preferred embodiment provides the benefit of saving MAC signaling overhead (MAC = media access control) and preferably also RLC signaling overhead (RLC = radio link control).

Preferably, the method further comprises the step of receiving at the first network node third information and the third information indicates a capability of the second network node for performing the determining step. Thereby, the first network node gets the knowledge, which second network nodes connected to the first network node are capable for executing those steps of the method of the present invention related to the receiver side of the transmission channel. The features of the present invention may be offered by a new terminal class and the third information may comprise the new terminal class. The third information may be for example provided by the second network node being a mobile station in an uplink direction to a base station.

According to several alternative embodiments, the method further comprises the step of verifying, whether the allocating step shall be performed, and the verification is based on at least one of the following requirements: the third information has been received at the first network node, a time delay for recovering at least a first one of the first data unit and the at least one second data unit at the second network node is equal to or below a first predefined threshold, a data rate for a service of the first data unit and the at least one second data unit is equal to or above a second predefined threshold, the first data unit and the at least one second data unit are transmitted from at least two antenna systems in a multipoint transmission mode, a signal-to-interference ratio for receiving the first data unit and the at least one second data unit at the second network node is equal to or below a third predefined threshold. The first network node may apply one or several of the criteria given above, to decide, whether the inventive method shall be applied for the transmission of data from the first network node to the second network node. This allows to flexibly switching between the method of the present invention and a common transmission method not using a single allocation of several successive transmission resources for several data units and not using a determination of channel estimation covering reference signals, which are related to several data units.

Further advantageous features of the invention are defined and are described in the following detailed description of the invention.

## BRIEF DESCRIPTION OF THE FIGURES

The embodiments of the invention will become apparent in the following detailed description and will be illustrated by accompanying figures given by way of non-limiting illustrations.

    Figure 1 shows schematically a block diagram of a radio communication network.
    Figure 2 shows schematically a flow diagram of a method performed between network nodes of the radio communication network.
    Figure 3 shows schematically a block diagram of a base station for use in the radio communication network.
    Figure 4 shows schematically a block diagram of a mobile station for use in the radio communication network.

## DESCRIPTION OF THE EMBODIMENTS

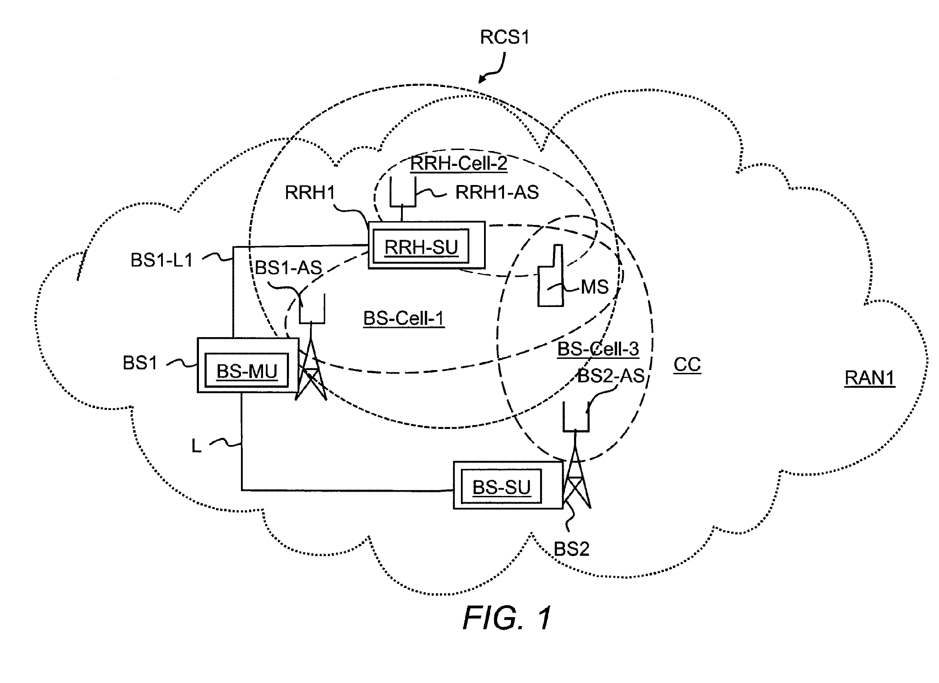

Figure 1 shows a radio communication system RCS1 comprising a radio access network RAN1 according to an exemplarily embodiment of the invention. The core network of the radio communication system RCS1 and connections of the radio communication system RCS1 to further radio communication systems, to the Internet or to fixed line communications systems are not shown for simplification.

The radio communication system RCS1 may be for example a 3GPP LTE radio communication network using OFDM (OFDM = Orthogonal Frequency Division Multiplexing). In further alternatives, the radio communication system RCS1 may for example a 3GPP UMTS radio communication network (UMTS = Universal Mobile Telecommunication Systems), a WiMAX radio communication network (WiMAX = Worldwide Interoperability for Microwave Access) based on the IEEE 802.16 standard family (IEEE = Institute of Electrical and Electronics Engineers), or a wireless local area network (WLAN = Wireless Local Area Network) based on the IEEE 802.11 standard family.

The radio access network RAN1 comprises exemplarily a first base station BS1, a second base station BS2 and a transmission path L between the first base station BS1 and the second base station BS2. The transmission path L may be for example an X2 interface such as applied in 3GPP LTE.

The term "base station" may be considered synonymous to and/or referred to as a base transceiver station, Node B, enhanced Node B, access point etc. and may describe equipment that provides wireless connectivity via one or more radio links to one or more mobile stations.

Further base stations, further connections between the base stations, and connections between the base stations and network nodes of the core network are not shown for simplification.

The first base station BS1 comprises for example a master unit BS-MU, a first remote radio head RRH1 with active elements such as a power amplifier (RRH = remote radio head), a first transmission path BS1-L1 between the first base station BS1 and the first RRH RRH1, and a first antenna system BS1-AS located next to the first base station RAN1-BS without active elements and directly connected to the first base station RAN1-BS. Alternatively, the first base station BS1 comprises more than one RRH and/or more than one antenna system directly connected to the first base station RAN1-BS.

The first antenna system BS1-AS may comprise for example two antenna elements. Alternatively the first antenna system BS1-AS may comprise more than two antenna elements such as four antenna elements.

The first transmission path BS1-L1 may be for example based on the CPRI standard (CPRI = Common Public Radio Interface).

The first RRH RRH1 comprises a first slave unit RRH-SU and a second antenna system RRH1-AS connected to the first slave unit RRH-SU. The second antenna system RRH 1-AS may comprise for example two antenna elements and may be a passive antenna array or an active antenna array. In an active antenna array complete RF transceivers may be integrated into each antenna element and the antenna elements are stacked to form the active antenna array.

In a passive antenna array, the RF transceivers are separated from the antenna elements.

Alternatively the second antenna system RRH1-AS may comprise more than two antenna elements such as four antenna elements.

The first antenna system BS1-AS provides wireless coverage for a first radio cell BS-Cell-1 and the second antenna system RRH1-AS provides wireless coverage for a second radio cell RRH-Cell-2.

The term "radio cell" may be considered synonymous to and/or referred to as cell, radio sector, sector etc.

The second base station BS2 comprises a second slave unit BS-SU and a third antenna system BS2-AS connected to the second slave unit BS-SU. The third antenna system BS2-AS may comprise two antenna elements and provides wireless coverage for a third radio cell BS-Cell-3. In further alternatives, the second base station BS2 may comprise more than one antenna system and the third antenna system BS2-AS may comprise more than two antenna elements such as four antenna elements.

The first radio cell BS-Cell-1 and the second radio cell RRH-Cell-2 may be configured to be parts of a cooperative cluster CC and thereby the first slave unit RRH-SU is controlled by the master unit BS-MU.

In further alternatives, two or more radio cells may be configured to be parts of the cooperative cluster CC.

The term "cooperative cluster" may be considered synonymous to and/or referred to as cooperative set, cooperation set, CoMP cluster, cluster etc. and may describe two or more antenna elements of a radio communication system that may cooperate for a joint transmission of uplink radio frequency signals to one or more mobile stations.

Preferably, the antenna arrays respectively the radio cells belonging to the cooperative cluster CC may be selected based on distributed self-configuration algorithms executed at the base stations BS1, BS2 of the radio communication system Rocs1. The self-configuration algorithms may be based for example on long term measurements on pathlosses between mobile stations located at specific locations within the coverage areas of the radio cells BS-Gell-1, RRH-Cell-2 and RRH-Cell-3 and the antenna systems BS1-AS, RRH1-As and BS2-AS of the radio communication system RCS1.

In an alternative, the cooperative cluster CC may be configured by an O&M network node (O&M = Operation and Maintenance) of the radio communication system RCS1 (not shown in Figure 1 for simplification).

A mobile station MS may be located within an overall coverage area of the cooperative cluster CC.

The term "mobile station" may be considered synonymous to, and may hereafter be occasionally referred to, as a mobile unit, mobile user, access terminal, user equipment, subscriber, user, remote station etc. The mobile station MS may be for example a cellular telephone, a portable computer, a pocket computer, a handheld computer, a personal digital assistant or a carmounted mobile device.

In a downlink direction from the cooperative cluster CC to the mobile station MS, all the radio cells or a subset of the radio cells BS-Cell-1 and RRH-Cell-2 of the cooperative cluster CC may transmit in a multipoint transmission mode via a downlink MIMO transmission (MIMO = multiple input multiple output) or a downlink MISO transmission (MISO = multiple input single output) downlink radio frequency signals comprising data units for signalling information to the mobile station MS or for a user service such as a video download running at the mobile station MS.

According to the present invention, the master unit BS-MU of the first base station RAN1-BS allocates a first time interval for a transmission of a first data unit to be transmitted to the mobile station MS and one or several further time intervals for one or several further transmissions of one or several further data units to be transmitted to the mobile station MS. Then, the first base station RAN1-BS transmits the first data unit for example to all antenna systems BS1-AS, RRH1-AS of the cooperative cluster CC and all the antenna systems BS1-AS, RRH1-AS transmit the first data unit together with first reference signals in the first time interval to the mobile station MS. After that, the first base station RAN 1-BS may transmit the one or several further data units to all antenna systems BS1-AS, RRH1-AS of the cooperative cluster CC and all the antenna systems BS1-AS, RRH1-AS transmit the one or several further data units together with further reference signals to the mobile station MS. Alternatively, the first base station RAN1-BS may transmit the first data unit simultaneously with the one or several further data units to all antenna systems BS1-AS, RRH1-AS of the cooperative cluster CC.

The mobile station MS receiving the first data unit together with the first reference signals and receiving the one or several further data units together with the further reference signals determines a channel estimation for a transmission channel between the cooperative cluster CC and the mobile station MS based on the first reference signals and the further reference signals.

Such allocation of time intervals for the first data unit and the one or several further data units and such a determination of channel estimation of the present invention may be also applied between a single radio cell controlled by a base station of the radio communication system RCS1 and the mobile station MS and thereby an application of the present invention is not being restricted to a CoMP communication system.

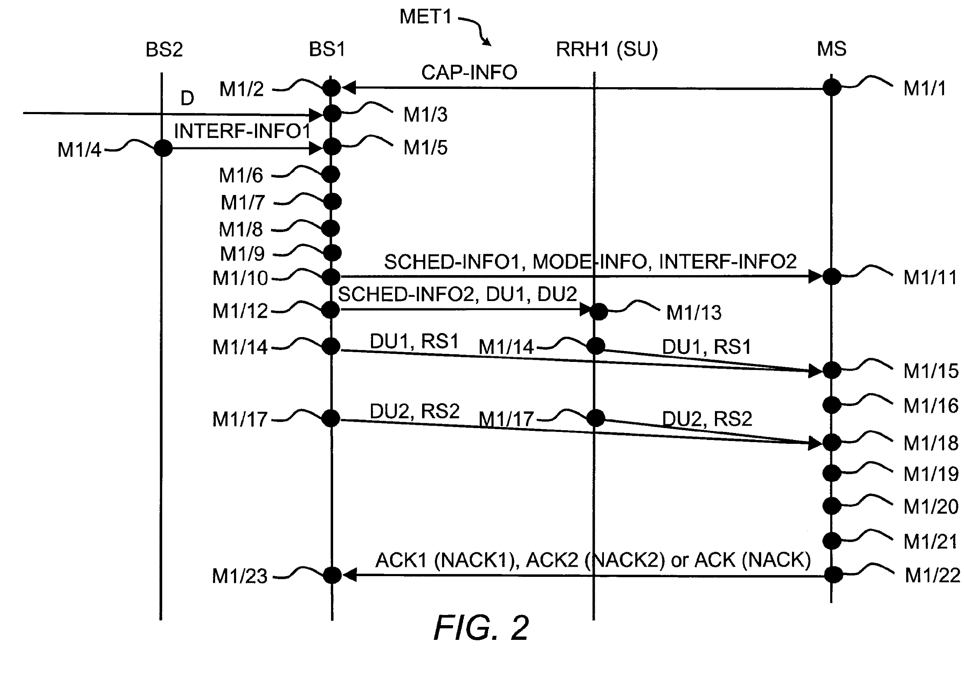

More details of the present invention are given with respect to Figure 2.

Referring to Figure 2 a flow diagram of a method MET1 in accordance to several alternative embodiments is shown. The number of the steps for performing the method MET1 is not critical, and as can be understood by those skilled in the art, that the number of the steps and the order of the steps may vary without departing from the scope of the invention. Also some of the steps may be executed at a same time, e.g. steps M1/3 and M1/5 or steps M1/8 and M1/10. The method MET1 is shown with respect to the network nodes shown in Figure 1.

In a first optional step M1/1, the mobile station MS may transmit capability information CAP-INFO to the first base station BS1 and in a second optional step M1/2, the first base station BS1 receives the capability information CAP-INFO. The capability information CAP-INFO indicates for example by using a one bit flag a capability of the mobile station MS for performing a channel estimation over a time frame of two or more time intervals, in which two or more data units may be transmitted from the radio communication system RCS1 to the mobile station MS. The time interval may be for example a $\Pi I$ ($\Pi I$ = Transmission Time Interval) of 1 ms, corresponding to a so-called subframe, such as applied in 3GPP LTE. This means, that the mobile station MS must be capable to store data units and reference signals such as beacon or pilots of consecutive $\Pi Is$. The capability information CAP-INFO may be transmitted from the mobile station MS at a point of time, when the mobile station MS performs registration and authentication with the radio communication system RCS1. In an alternative, the capability information CAP-INFO may be transmitted from the mobile station MS at a point of time, when the mobile station MS performs a location update for a new location area or new routing area. In a further alternative, the capability information CAP-INFO may be transmitted from the mobile station MS at a point of time, when the mobile station MS performs a handover to a radio cell under control of the first base station BS1. In an even further alternative, the capability information CAP-INFO may be retrieved at the first base station BS1 from a HLR (HLR = home location register) or VLR (VLR = visitor location register) during a registration and authentication process for the mobile station MS. A transmission of the capability information CAP-INFO may be not required, if all mobile station support such a capability.

In a next optional step M1/3, the first base station BS1 may receive data D from a core network node of the radio communication system RCS1. The data D may be for example user data such as an IPv4 data packet or an IPv6 data packet for a service running at the mobile station MS. In an alternative, the data D may be signalling information for example from the core network node to be forwarded to the mobile station MS.

In a further alternative instead of performing the step M1/3, the first base station BS1 may have generated signalling information data D for controlling the mobile station MS and which needs to be transmitted to the mobile station MS.

In a further optional step M1/4, the second base station BS2 as a neighbour base station of the first base station BS1 may transmit first interference information INTERF-INFO1 to the first base station Bs1 and the first base station BS1 receives the first interference information INTERF-INFO1 in a next optional step M1/5. The first interference information INTERF-INFO1 indicates a utilization of radio resources for one or several next time intervals at the second base station BS2 for the third radio cell BS-Cell-3. The transmission of the first interference information INTERF-INFO1 may be repeated by the second base station BS2 for each time interval, if the first interference information INTERF-INFO1 only comprises information for a single time interval or it may be repeated after several time intervals, if the first interference information INTERF-INFO1 comprises a number of time intervals larger 1 for which a same PRB is allocated by the second base station BS2. The first interference information INTERF-INFO1 may comprise for example bit-wise indications for one or several time-frequency-resources such as PRBs as applied in 3GPP LTE, that indicate an allocation of these time-frequency-resources for a next time interval or for several next time intervals by setting the bits for these specific time-frequency-resources to "1". A bit position in a bit series may implicitly indicate a specific time-frequency-resource.

In an alternative, the first interference information INTERF-INFO1 may comprise for example bit-wise indications for one or several time-frequency-resources, that indicate a non-allocation of these time-frequency-resources for the next time interval or for the several next time intervals by setting the bits for these specific time-frequency-resources to "1". Preferably, the first interference information INTERF-INFO1 may further indicate a utilization of same precoding weights to be applied to the antenna elements of the antenna system BS2-AS of the second base station BS2 for two or more successive next time intervals and for a same frequency resource such as a group of 12 adjacent OFDM subcarriers as applied in 3GPP LTE.

The term "transmit weight" may be considered synonymous to, and may hereafter be occasionally referred to, as an antenna weight, beamforming weight, precoder, precoding weight, transmit precoder, etc.

In a further step M1/6, the master unit BS-MU of the first base station BS1 may split the data D into the first data unit and a second data unit corresponding to a size of a transmission resource unit of the radio communication system RCS1. The transmission resource unit may be for example the PRB such as applied in 3GPP LTE. Alternatively, the data D may be split in more than two data units.

In a next optional step M1/7, the master unit BS-MU of the first base station BS1 may verify, whether data units of the data D shall be transmitted by a common HARQ process or by a joint scheduling and channel estimation process according to the invention.

In case of the common HARQ process, a first scheduling for a first transmission of a first data unit, the first transmission of the first data unit to the mobile station MS, at least one second scheduling for at least one second transmission of at least one second data unit, and the at least one second transmission of the at least one second data unit to the mobile station MS may be executed by the cooperative cluster CC. On the receiver side, a first channel estimation for the first data unit, a transmission of a first positive or negative acknowledgement to the cooperative cluster CC at a predefined time after the transmission of the first data unit, at least one second channel estimation for the at least one second data unit, and at least one second transmission of at least one second positive or negative acknowledgement to the cooperative cluster CC at the predefined time after the transmission of the at least one second data unit in form of a synchronous HARQ process may be executed by the mobile station MS.

In case of a joint scheduling and channel estimation process, joint scheduling on a transmitter side means a single scheduling for a first transmission of a first data unit and for at least one second transmission of at least one second data unit and afterwards the first transmission of the first data unit and the at least one second transmission of the at least one second data unit to the mobile station MS are executed by the cooperative cluster CC. Joint channel estimation on the receiver side means a single channel estimation for the first data unit and the at least one second data unit, a transmission of a first positive acknowledgement or a first negative acknowledgement to the cooperative cluster CC at a predefined time after the transmission of the first data unit and at least one second transmission of at least one second positive acknowledgement or at least one second negative acknowledgement to the cooperative cluster CC not at the predefined time after the transmission of the at least one second data unit in form of an asynchronous HARQ process may be executed by the mobile station MS.

The verification may be based on one or several of the following requirements:

> According to a first requirement, the joint scheduling and channel estimation process may be applied for transmitting the data D, if the capability information CAP-INFO has been received in the step M1/2, indicating a capability of the mobile station MS for being able to perform the joint channel estimation.

According to a second requirement, a time delay for recovering at least a first one of the first data unit and the at least one second data unit at the mobile station MS may be equal to or below a first predefined threshold. Due to the joint channel estimation positive or negative acknowledgements for data units, which have been transmitted first during the joint scheduling and channel estimation process may arrive later, then during a common HARQ process. This means for example even if the mobile station MS may be capable for the joint channel estimation, the data D contained in the first data unit and the at least one second data unit may belong to a highly delay-sensitive service such as a online gaming, in which case a delay of for example 3 ms for recovering the first data unit or for transmitting a negative acknowledgement for requesting a retransmission may be not tolerable.

According to a third requirement, a data rate for a service of data D is equal to or above a second predefined threshold. This means, that the joint scheduling and channel estimation may be only applied, if the data D belong to a service with high data volumes such as a video download with a data rate of for example at least 1 Mbit/s or at least 10 Mbit/s.

According to a fourth requirement, the first data unit and the at least one second data unit will be transmitted from the first antenna system BS1-AS and the second antenna system RRH1-AS in a multipoint transmission mode. This means, that the joint scheduling and channel estimation may be only applied, if a CoMP transmission mode is applied for the mobile station MS.

According to a fifth requirement, a signal-to-interference ratio for receiving data units at the mobile station MS is equal to or below a third predefined threshold. This means, that the joint scheduling and channel estimation can be also used without the CoMP transmission mode for example for a mobile station with a low SINR conditions such as a mobile station, which is located at a cell edge between two radio cells. For example, the joint scheduling and channel estimation process may be only applied if an SINR value measured at the mobile station MS and transmitted to the first base station BS1 is equal to or below 3 dB.

The optional step M1/7 may be not required, if all mobile stations connected to the radio communication system RCS1 are capable for the joint scheduling and channel estimation and if the joint scheduling and channel estimation is configured as a standard procedure.

In a next step M1/8, if the master unit BS-MU has decided to transmit the data D by the joint scheduling and channel estimation process, the master unit BS-MU may set a duration timer for the joint scheduling and channel estimation process. The duration timer determines how many successive time intervals and thereby how many data units of the data D will be applied for the joint scheduling and channel estimation process. A size of the duration timer may depend for example on an input buffer size of the mobile station MS and a time constant describing how fast the channel conditions between the cooperative cluster CC and the mobile station MS may change.

The LTE physical-layer specification allows for a downlink carrier to consist of a group of adjacent PRBs from a minimum of 6 up to a maximum of 110.

In a further step M1/9, the master unit BS-MU executes a combined scheduling for the first data unit and the second data unit by allocating for the first time interval a first PRB of the group of adjacent PRBs for the transmission of the first data unit and for the second time interval a second PRB of the group of adjacent PRBs for the transmission of the second data unit.

Alternatively, the master unit BS-MU may allocate further PRBs for transmissions of further data units for the combined scheduling, if the duration timer comprises more than two time intervals.

In a further step M1/10, the master unit BS-MU transmits first scheduling information SCHED-INFO1 preferably on a control channel such as the Physical Downlink Control Channel (PDCCH) in 3GPP LTE to the mobile station MS and the mobile station MS receives the first scheduling information in a next step M1/11. The first scheduling information SCHED-INFO1 comprises indications for the mobile station MS, which PRBs during the first time interval and the at least one second time interval will comprise the data D for the mobile station MS. Preferably, the first scheduling information SCHED-INFO1 will be attended by transmission mode information MODE-INFO. The transmission mode information MODE-INFO may be for example a single bit indicating for example by a "0" a common HARQ process and by a "1" the joint scheduling and channel estimation process. The transmission mode information MODE-INFO instructs the mobile station MS to execute the joint channel estimation. Further preferred, the first scheduling information SCHED-INFO1 will be attended by second interference information INTERF-INF02. The second interference information INTERF-INFO2 indicates a utilization of radio resources for one or several next time intervals at the second base station BS2 for the third radio cell BS-Cell-3 and for same frequency resources as applied for the mobile station MS during the first time interval and the second time interval. The second interference information INTERF-INFO2 may be a sub-set of the first interference information INTERF-INFO1 by comprising only interference information of frequency resources relevant for the mobile station MS.

Alternatively, the first scheduling information SCHED-INFO1, the transmission mode information MODE-INFO and the second interference information INTERF-INF02 may be transmitted to the mobile station MS in separate messages.

In a further step M1/12, the master unit BS-MU transmits second scheduling information SCHED-INFO2, the first data unit DU1 and the at least one second data unit DU2 to the first remote radio head RRH1 and the first remote radio head RRH1 receives the second scheduling information SCHED-INFO2, the first data unit DU1 and the at least one second data unit DU2 in a next step M1/13. The second scheduling information SCHED-INFO2 indicates to the first remote radio head RRH1, which PRBs during the first time interval and the at least one second time interval shall be used to transmit the first data unit DU1 and the at least one second data unit DU2 in the multipoint transmission mode to the mobile station MS.

In a next step M1/14, the first base station BS1 and the first remote radio head RRH1 transmit during the first time interval in the first PRB the first data unit DU1 and first reference signals RS1 related to the first data unit DU1 to the mobile station MS and the mobile station MS receives the first data unit DU1 and the first reference signals RS1 in a further step M1/15.

In a next step M1/16, the mobile station MS stores the received first data unit DU1 and the received first reference signals RS1 in a buffer or $\alpha$ memory.

In a further step M1/17, the first base station BS1 and the first remote radio head RRH1 transmit during the second time interval in the second PRB the second data unit DU2 and first reference signals RS2 related to the second data unit DU2 to the mobile station MS and the mobile station MS receives the second data unit DU2 and the second reference signals RS2 in a next step M1/18.

The first data unit DU1 and the second data unit DU2 may be transmitted with a same transport format over the transmission channel to the mobile station MS. This means, a same data rate, a same coding scheme, a same modulation scheme and a same antenna mapping may be applied for the first data unit DU1 and the second data unit DU2. This can be done for example in case of 3GPP LTE by aggregating the first PRB and the second PRB into a single transport block.

The first reference signals RS1 and the second reference signals RS2 may be for example known reference symbols, which are inserted within a first and a third last OFDMS symbol of a PRB at a specific frequency subcarrier and with a frequency-domain spacing of six subcarriers such as applied in 3GPP LTE with the so-called cell-specific reference symbols (CRS). This means for example, that four first reference symbols may be transmitted within the first time interval and four second reference symbols may be transmitted within the second time interval.

Alternatively, the first base station BS1 and the first remote radio head RRH1 transmit in addition to the first data unit DU1 and the second data unit DU2 at least a further data unit and in addition to the first reference signals RS1 and the second reference signals RS2 at least further reference signals related to the at least further data unit, if the duration timer comprises more than two time intervals. This is not shown in Figure 2 for simplification. Preferably, the first PRB and the at least one second PRB belong to a same group of 12 adjacent subcarriers. This means, that the first data unit and the at least one second data unit will be transmitted preferably on a same frequency resource.

Alternatively, the allocation of resources for the first data unit DU1 and the transmitting of scheduling information for the first data unit DU1 is separated and is done before the allocation of resources for the second data unit DU2 and the transmitting of scheduling information for the second data unit DU2 is executed.

In a further step M1/19, the mobile station MS stores the received second data unit DU2 and the received second reference signals RS2 in the buffer or the memory.

In a next step M1/20, the mobile station MS determines for the transmission channel between the cooperative cluster CC and the mobile station MS the channel estimation based on the first reference signals RS1 and the second reference signals RS2. Alternatively, the mobile station MS determines the channel estimation based on the first, the second and at least one further reference signals.

The determining step M1/20 may be based on space-time-frequency filtering over the first time interval and the second time interval.

For an OFDM system for example, a first pilot receive signal vector $y_1$ at pilot resource element positions of time instant 1 (for a particular antenna) for the first reference signals RS1 can be written as $Y_1 = S_1 h_1 + n_1$, with $S_1$ being a diagonal matrix containing the pilot symbol resource elements, $h_1$ being a radio channel vector for all pilots and $n_1$ contains noise and interference. Similarly, for time instant 2 for the second reference signals RS2, a second pilot receive signal vector is $y_2 = S_2 h_2 + n_2$. We can write a joint receive vector for both time instants as stacked vector

$$\mathbf{y}^{[both]} = \begin{bmatrix} \mathbf{y}_1^T & \mathbf{y}_2^T \end{bmatrix}^T .$$

A linear channel estimator acts as an FIR filter (FIR = Finite Impulse Response) on the pilot receive signal vectors $y_1$, $y_2$. An estimator relying solely on the first time instant estimates the channel of a particular antenna at α particular resource element

$$k \text{ as } \hat{h}_k^{[1]} = \mathbf{w}_k^{[1]^T} \mathbf{y}_1, \text{ with } \mathbf{w}_k^{[1]^T} \text{ being the}$$

weight vector of the estimator. The estimator can e.g. be based on least squares estimation plus windowed averaging. Another powerful option is e.g. Wiener filtering, as described e.g. in P. Hoeher, S. Kaiser, P. Robertson, "Two-dimensional pilot-symbol-aided channel estimation by Wiener filtering," IEEE International Conference on Acoustics, Speech, and Signal Processing ICASSP-97), vol.3, pp.1845-1848, 21-24 Apr 1997. Here the weights are additionally using statistical channel properties, which additionally have to be extracted from the signal. The weights can be computed as

$$\mathbf{w}_k^{[1]^T} = \mathbf{\Theta}_k^T \mathbf{\varphi}^{-1}, \text{ with } \mathbf{\Theta}_k^T \text{ denoting the}$$

cross-covariance vector between the data resource element k and the considered pilot symbols, and $\varphi^{-1}$ denoting the inverse auto-covariance matrix of receive signal between all considered pilot positions.

The invention now allows to improve the channel estimation of e.g. the first time instant by buffering the input signal and using the receive signal of at least one second time instant, thus $\mathbf{y}^{[both]}$. The better estimate now is $\hat{h}_k^{[both]} = \mathbf{w}_k^{[both]^T} \mathbf{y}^{both}$, as it obviously relies on more pilot symbols and thus provides improved accuracy.

In a further step M1/21, the mobile station MS recovers the first data unit DU1 and the second data unit DU2 based on the channel estimation. The recovering may be done by a conventional equalizer, demapper and channel forward error correction (FEC) decoder.

In a next step M1/22, the mobile station MS transmits positive or negative acknowledgements for the first data unit DU1 and the second data unit DU2 depending on a result of the recovering step M1/21 showing that the first data unit DU1 and/or the second data unit DU2 have been recovered error-free or not error-free. In a further step M1/23, the master unit BS-MU of first base station BS1 receives the positive or negative acknowledgements from the mobile station MS.

In a first alternative, if both, the first data unit DU1 and the second data DU2, have been recovered error-free a combined positive acknowledgement ACK may be transmitted and if both, the first data unit DU1 and the second data unit DU2, have been not recovered error-free a combined negative acknowledgement NACK may be transmitted.

In a second alternative, separate positive acknowledgements ACK1, ACK2 and separate negative acknowledgements NACK1, NACK2 for the first data unit DU1 and the second data unit DU2 may be transmitted by the mobile station MS depending on the result of the recovering step M1/21.

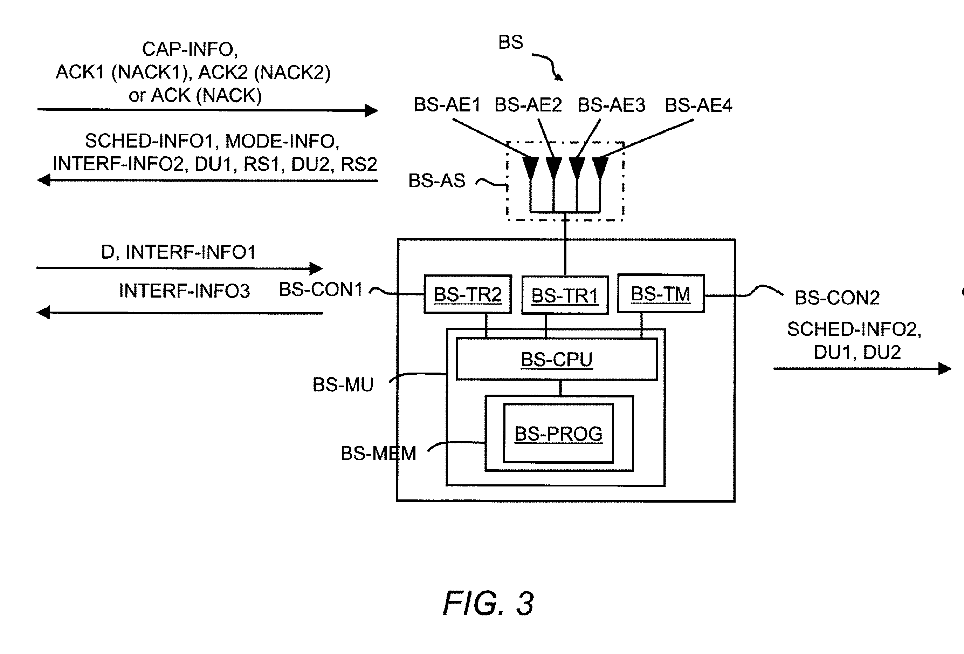

Referring to Figure 3 a block diagram of a base station BS for use in the radio communication network RCS1 is shown. The base station BS may be for example the first base station BS1 or the second base station BS2 shown in Figure 1.

The base station BS may comprise an antenna system BS-AS, a first transceiver BS-TR1 connected to the antenna system BS-AS, a first external connector BS-CON1, a second transceiver BS-TR2 connected internally to the first external connector BS-CON1, a second external connector BS-CON2, a transmitter BS-TM connected internally to the second external connector BS-CON2, and the master unit BS-MU.

The master unit BS-MU may be for example a digital baseband processing board of the base station BS with master functions for a cooperative multipoint transmission and may comprise a CPU (CPU = central processing unit) BS-CPU, and a computer readable medium BS-MEM. In an alternative, the digital baseband processing board may be no master unit, if there is no cooperative multipoint transmission applied in the radio communication system RCS1.

The antenna system BS-AS may be for example the first antenna system BS1-AS or the second antenna system BS2-AS and may comprise a first antenna element BS-AE1, a second antenna element BS-AE2, a third antenna element BS-AE3 and a fourth antenna element BS-AE4. In further alternatives, the antenna system BS-AS may comprise one, two, three or more than four antenna elements.

The CPU BS-CPU is foreseen for executing a computer readable program BS-PROG.

In a downlink direction, the first transceiver BS-TR1 and the antenna system BS-AS may transmit the first scheduling information SCHED-INFO1, the transmission mode information MODE-INFO, the second interference information INTERF-INFO2, the first data unit DU1, the first reference signals RS1, the second data unit DU2 and the second reference signals RS2.

In an uplink direction, the antenna system BS-AS and the first transceiver BS-TR1 may receive the capability information CAP-INFO, the separate positive acknowledgements ACK1, ACK2 or the combined positive acknowledgement ACK or the separate negative acknowledgements NACK1, NACK2 or the combined negative acknowledgement NACK.

The first connector BS-CON1 and the second transceiver BS-TR2 may receive the data D from the core network node of the radio communication system RCS1 and the first interference information INTERF-INFO1 from a neighbouring base station. The second transceiver BS-TR2 may transmit third interference information INTERF-INFO3 to the neighbouring base station. The third interference information INTERF-INF03 may indicate a utilization of radio resources for one or several next time intervals at the base station BS for one or several of its radio cells similar to the first interference information INTERF-INFO1.

The transmitter BS-TM and the second connector BS-CON2 may transmit the second scheduling information SCHED-INFO2, the first data unit DU1 and the second data unit DU2.

The computer readable medium BS-MEM is foreseen for storing the computer readable program BS-PROG and may store the data D, the first interference information INTERF-INFO1 and the capability information CAP-INFO.

The computer readable program BS-PROG may be foreseen for executing steps of the method MET1 relating to the base station BS.

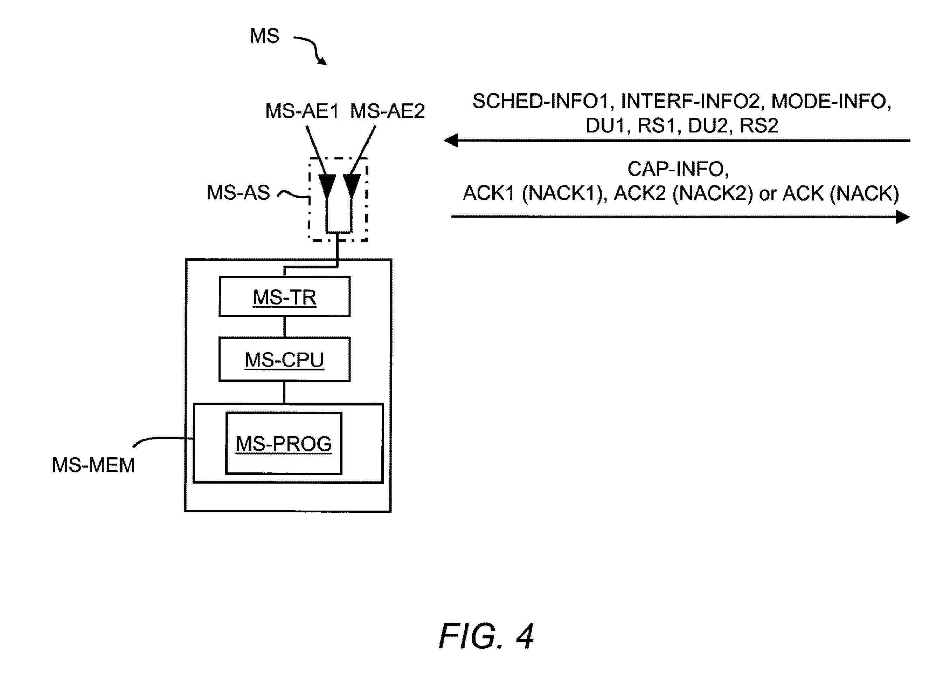

Referring to Figure 4 a block diagram of the mobile station MS for use in the radio communication network RCS1 is shown. The mobile station MS may comprise an antenna system MS-AS, a transceiver MS-TR, a CPU (CPU = central processing unit) MS-CPU connected to the antenna system MS-AS, and a computer readable medium MS-MEM. The CPU MS-CPU and the computer readable medium MS-MEM may be based on a digital baseband board of the mobile station MS. The CPU MS-CPU is foreseen for executing a computer readable program MS-PROG.

The antenna system MS-AS may comprise a first antenna element MS-AE1 and a second antenna element MS-AE2. Alternatively, the antenna system MS-AS may comprise one antenna element or more than two antenna elements.

In the downlink direction, the antenna system MS-AS and the transceiver MS-TR may receive the first scheduling information SCHED-INFO1, the second interference information INTERF-INFO2, the transmission mode information MODE-INFO, the first data unit DU1, the first reference signals RS1, the second data unit DU2 and the second reference signals RS2.

In the uplink direction, the transceiver MS-TR and the antenna system MS-AS may transmit the capability information CAP-INFO, the separate positive acknowledgements ACK1, ACK2 or the combined positive acknowledgement ACK or the separate negative acknowledgements NACK1, NACK2 or the combined negative acknowledgement NACK.

The computer readable medium MS-MEM is foreseen for storing the computer readable program MS-PROG and may store the first scheduling information SCHED-INFO1, the second interference information INTERF-INFO2, the first data unit DU1, the first reference signals RS1, the second data unit DU2 and the second reference signals RS2.

The computer readable program MS-PROG is foreseen for executing steps of the method MET1 relating to the mobile station MS.

A person of skill in the art would readily recognize that steps of various above-described method MET1 can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for receiving", "means for verifying", "means for determining", "means for transmitting, "means for performing", "means for scheduling", "means for instructing" may be provided through the use of dedicated hardware, such as "a receiver", "a verifier", "a determiner", "a transmitter", "a performer or a processor", "a scheduler", as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method (MET1) for transmitting data in a communication system (RCS1), said communication system (RCS1) comprises a first network node (BS, BS1), said method (MET1) comprising the steps of:

   - transmitting (M1/14) from said first network node (BS, BS1) to a second network node (MS) during a first time interval a first data unit (DU1) and first reference signals (RS1) related to said first data unit (DU1),
   - transmitting (M1/17) from said first network node (BS, BS1) to said second network node (MS) during at least one second time interval temporally after said first time interval at least one second data unit (DU2) and at least second reference signals (RS2) related to said at least one second data unit (DU2),
   - determining (M1/20) at said second network node (MS) for a transmission channel between said first network node (BS, BS1) and said second network node (MS) a channel estimation based on said first reference signals (RS1) and based on said at least one second reference signals (RS2), and
   - recovering (M1/21) at said second network node (MS) said first data unit (DU1) and said at least one second data unit (DU2) based on said channel estimation.

2. Method (MET1) according to claim 1, wherein said method (MET1) further comprises the step of transmitting (M1/10) from said first network node (BS, BS1) to said second network node (MS) first information (MODE-INFO) and wherein said first information (MODE-INFO) instructs said second network node (MS) to execute said determining step (M1/20) and said recovering step (M1/21).

3. Method (MET1) according to any of the preceding claims, wherein said first data unit (DU1) and said at least one second data unit (DU2) are transmitted on a same frequency resource.

4. Method (MET1) according to claim 2 and claim 3, wherein said first information (MODE-INFO) comprises an indication of said same frequency resource for said first time interval and said at least one time interval.

5. Method (MET1) according to any of the preceding claims, wherein said communication system (RCS1) further comprises a third network node (BS, BS2), and wherein said method (MET1) further comprises the steps of:

   - transmitting (M1/4) second information (INTERF-INFO1 from said third network node (BS, BS2) to said first network node (BS, BS1), said second information (INTERF-INFO1) indicates an utilization of radio resources at said third network node (BS, BS2) for said first time interval and said at least one second time interval, and
   - transmitting (M1/10) said second information (INTERF-INFO1) from said first network node (BS, BS1) to said second network node (MS).

6. Method (MET1) according to claim 5, wherein said third network node (NN3) comprises an antenna array and wherein said second information (RES-UTIL-INFO) further indicates an utilization of same precoding weights applied to said antenna array for said same frequency resource and for said first time interval and said at least one second time interval.

7. Method (MET1) according to any of the preceding claims, wherein said first data unit (DU1) and said at least one second data unit (DU2) are transmitted in a single transport block comprising a single MAC header.

8. Method (MET1) according to any of the preceding claims, wherein said method (MET1) further comprises the step of receiving (M1/2) at said first network node (NN1, BS1) third information (CAP-INFO) and wherein said third information (CAP-INFO) indicates a capability of said second network node (MS) for performing said determining step (M1/18).

9. Method (MET1) according to any of the preceding claims, wherein said method further comprises the step of verifying (M1/7) at said first network node (BS, BS1), whether said allocating step (M1/9) shall be performed, and wherein said verification is based on at least one of the following requirements:

- said third information (CAP-INFO) has been received at said first network node (RAN 1-M2),
- a time delay for recovering at least a first one of said first data unit (DU1) and said at least one second data unit (DU2) at said second network node (MS) will be equal to or below a first predefined threshold,
- a data rate for a service of said first data unit (DU1) and said at least one second data unit (DU2) is equal to or above a second predefined threshold,
- said first data unit (DU1) and said at least one second data unit (DU2) will be transmitted from at least two antenna systems (BS1-AS, RRH1-AS) in a multipoint transmission mode,
- a signal-to-interference ratio for receiving data units at said second network node (MS) is equal to or below a third predefined threshold.

10. Method (MET1) according to any of the preceding claims, wherein said determining step (M1/20) is based on a space-time-frequency filtering over said first time interval and said at least one second time interval.

11. Method (MET1) according to any of the preceding claims, wherein said method further comprises the steps of:

- executing (M1/9) a combined scheduling of said first data unit (DU1) and said at least second data unit (DU2) at said first network node (BS, BS1), and
- storing (M1/16, M1/19) said first data unit (DU1), said at least second data unit (DU2), said first reference signals (RS1) and said at least second reference signals (RS2) at said second network node (MS) and wherein said recovering step (M1/21) is performed, if all data units (DU1, DU2) of said combined scheduling have been received at said second network node (MS).

12. A first network node (BS1, BS2) for use in a communication system (RCS1), said first network node (BS1, BS2) comprising:

- means (BS-TR1, BS-AS) for transmitting to a second network node (MS) a first data unit (DU1) and first reference signals (RS1) related to said first data unit (DU1) during a first time interval and at least one second data unit (DU2) and at least second reference signals (RS2) related to said at least one second data unit (DU2) during at least one second time interval temporally after said first time interval, and
- means (BS-CPU, BS-PROG) for instructing the second network node (MS) to determine for a transmission channel between said first network node (BS, BS1) and said second network node (MS) a channel estimation based on said first reference signals (RS1) and based on said at least one second reference signals (RS2) and to recover said first data unit (DU1) and said at least one second data unit (DU2) based on said channel estimation.

13. First network node (BS1, BS2) according to claim 12, wherein said first network node (BS1, BS2) is a base station.

14. A second network node (MS) for use in a communication system (RCS1), said second network node (MS) comprises:

- means (MS-AS, MS-TR) for receiving from a first network node (BS1, BS2) a first data unit (DU1) and first reference signals (RS1) related to said first data unit (DU1) during a first time interval and at least one second data unit (DU2) and at least second reference signals (RS2) related to said at least one second data unit (DU2) during at least one second time interval temporally after said first time interval,
- means (MS-CPU, MR-PROG) for determining for a transmission channel between said first network node (BS1, BS2) and said second network node (MS) a channel estimation based on said first reference signals (RS1) and based on said at least one second reference signals (RS2), and
- means (MS-CPU, MR-PROG) for recovering said first data unit (DU1) and said at least one second data unit (DU2) based on said channel estimation.

15. Second network node (MS) according to claim 14, wherein said second network node (MS) is a mobile station.

**Amended claims in accordance with Rule 137(2) EPC.**

**1.** A method (MET1) for transmitting data in a communication system (RCS1), said communication system (RCS1) comprises a first network node (BS, BS1), said method (MET1) comprising the steps of:

- transmitting (M1/10) from said first network node (BS, BS1) to a second network node (MS) first information (MODE-INFO) for applying a same frequency resource for a first time interval and at least one second time interval and for instructing said second network node (MS) to determine for a transmission channel between said first network node (BS, BS1) and said second network node (MS) a channel estimation based on first reference signals (RS1) and based on second reference signals (RS2) and to recover a first data unit (DU1) and a second data unit (DU2) based on said channel estimation,

- transmitting (M1/14) from said first network node (BS, BS1) to said second network node (MS) on said same frequency resource during said first time interval said first data unit (DU1) and said first reference signals (RS1),
- transmitting (M1/17) from said first network node (BS, BS1) to said second network node (MS) on said same frequency resource during said at least one second time interval temporally after said first time interval said second data unit (DU2) and said second reference signals (RS2),
- determining (M1/20) at said second network node (MS) for said transmission channel between said first network node (BS, BS1) and said second network node (MS) said channel estimation based on said first reference signals (RS1) and based on said at least one second reference signals (RS2), and
- recovering (M1/21) at said second network node (MS) said first data unit (DU1) and said second data unit (DU2) based on said channel estimation.

**2.** Method (MET1) according to any of the preceding claims, wherein said method further comprises the steps of:

- executing (M1/9) a combined scheduling of said first data unit (DU1) and said second data unit (DU2) at said first network node (BS, BS1), and
- storing (M1/16, M1/19) said first data unit (DU1), said second data unit (DU2), said first reference signals (RS1) and said at least second reference signals (RS2) at said second network node (MS) and wherein said recovering step (M1/21) is performed, if all data units (DU1, DU2) of said combined scheduling have been received at said second network node (MS).

**3.** Method (MET1) according to claim 2, wherein said method further comprises the step of verifying (M1/7) at said first network node (BS, BS1), whether said executing step (M1/9) shall be performed, and wherein said verification is based on at least one of the following requirements:

- a reception of third information (CAP-INFO) at said first network node (RAN1-M2) and wherein said third information (CAP-INFO) indicates a capability of said second network node (MS) for performing said determining step (M1/18),
- a time delay for recovering at least a first one of said first data unit (DU1) and said second data unit (DU2) at said second network node (MS) will be equal to or below a first predefined threshold,
- a data rate for a service of said first data unit (DU1) and said second data unit (DU2) is equal to or above a second predefined threshold,
- said first data unit (DU1) and said second data unit (DU2) will be transmitted from at least two antenna systems (BS1-AS, RRH1-AS) in a multipoint transmission mode,
- a signal-to-interference ratio for receiving data units at said second network node (MS) is equal to or below a third predefined threshold.

**4.** Method (MET1) according to any of the preceding claims, wherein said communication system (RCS1) further comprises a third network node (BS, BS2), and wherein said method (MET1) further comprises the steps of:

- transmitting (M1/4) second information (INTERF-INF01) from said third network node (BS, BS2) to said first network node (BS, BS1), said second information (INTERF-INFO1) indicates an utilization of radio resources at said third network node (BS, BS2) for said first time interval and said at least one second time interval, and
- transmitting (M1/10) said second information (INTERF-INFO1) from said first network node (BS, BS1) to said second network node (MS).

**5.** Method (MET1) according to claim 4, wherein said third network node (NN3) comprises an antenna array and wherein said second information (RES-UTIL-INFO) further indicates an utilization of same precoding weights applied to said antenna array for said same frequency resource and for said first time interval and said at least one second time interval.

**6.** Method (MET1) according to any of the preceding claims, wherein said first data unit (DU1) and said at least one second data unit (DU2) are transmitted in a single transport block comprising a single MAC header.

**7.** Method (MET1) according to any of the preceding claims, wherein said determining step (M1/20) is based on a space-time-frequency filtering over said first time interval and said at least one second time interval.

**8.** Method (MET1) according to claim 1, wherein said same frequency resource is a physical resource block or a group of adjacent physical resource blocks.

**9.** Method (MET1) according to claim 1, wherein said first time interval is a first LTE subframe and wherein said second time interval is a second LTE second subframe.

**10.** A first network node (BS1, BS2) for use in a communication system (RCS1), said first network node (BS1, BS2) comprising:

- means (BS-CPU, BS-PROG, BS-TR1, BS-AS) for transmitting from said first network node (BS, BS1) to a second network node (MS) first information (MODE-INFO) for applying a same frequency resource for a first time interval and at least one second time interval and for instructing said second network node (MS) to determine for a transmission channel between said first network node (BS, BS1) and said second network node (MS) a channel estimation based on first reference signals (RS1) and based on second reference signals (RS2) and to recover a first data unit (DU1) and a second data unit (DU2) based on said channel estimation, and
- means (BS-TR1, BS-AS) for transmitting to said second network node (MS) on said same frequency resource said first data unit (DU1) and said first reference signals (RS1) during said first time interval and said second data unit (DU2) and said second reference signals (RS2) during said at least one second time interval temporally after said first time interval.

**11.** First network node (BS1, BS2) according to claim 10, wherein said first network node (BS1, BS2) is a base station.

**12.** A second network node (MS) for use in a communication system (RCS1), said second network node (MS) comprises:

- means (MS-AS, MS-TR) for receiving from a first network node (BS, BS1) first information (MODE-INFO) for applying a same frequency resource for a first time interval and at least one second time interval and for instructing said second network node (MS) to determine for a transmission channel between said first network node (BS, BS1) and said second network node (MS) a channel estimation based on first reference signals (RS1) and based on second reference signals (RS2) and to recover a first data unit (DU1) and a second data unit (DU2) based on said channel estimation,
- means (MS-AS, MS-TR) for receiving from said first network node (BS1, BS2) on said same frequency resource said first data unit (DU1) and said first reference signals (RS1) during said first time interval and said second data unit (DU2) and said second reference signals (RS2) during said at least one second time interval temporally after said first time interval,
- means (MS-CPU, MR-PROG) for determining for said transmission channel between said first network node (BS1, BS2) and said second network node (MS) said channel estimation based on said first reference signals (RS1) and based on said second reference signals (RS2), and
- means (MS-CPU, MR-PROG) for recovering said first data unit (DU1) and said second data unit (DU2) based on said channel estimation.

**13.** Second network node (MS) according to claim 12, wherein said second network node (MS) is a mobile station.

FIG. 1

*FIG. 2*

EP 2 544 420 A1

*FIG. 3*

EP 2 544 420 A1

MS

MS-AE1  MS-AE2

MS-AS

MS-TR

MS-CPU

MS-PROG

MS-MEM

SCHED-INFO1, INTERF-INFO2, MODE-INFO,
DU1, RS1, DU2, RS2

CAP-INFO,
ACK1 (NACK1), ACK2 (NACK2) or ACK (NACK)

*FIG. 4*

EP 2 544 420 A1

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 169 888 A1 (NTT DOCOMO INC [JP]) 31 March 2010 (2010-03-31) | 1,3,10, 12-15 | INV. H04L25/02 |
| Y | * paragraph [0017] * <br> * paragraph [0048] - paragraph [0049] * <br> * paragraph [0083] * <br> * paragraph [0103] - paragraph [0104] * <br> * paragraph [0107] * <br> * claim 13 * <br> * figures 2,3,5 * | 2,4-9,11 | |
| X | WANG J ET AL: "PILOT SYMBOL AIDED MAP-BASED 3D CHANNEL ESTIMATION FOR MULTI-USER MIMO-OFDM SYSTEMS", IEICE TRANSACTIONS ON COMMUNICATIONS, COMMUNICATIONS SOCIETY, vol. E89B, no. 3, 1 March 2006 (2006-03-01), pages 801-808, XP001240948, TOKYO, JP ISSN: 0916-8516 * Section 4 * | 1,3,10, 12-15 | |
| Y | US 2006/013338 A1 (GORE DHANANJAY A [US] ET AL) 19 January 2006 (2006-01-19) * paragraph [0007] * <br> * paragraph [0013] * <br> * paragraph [0024] * <br> * paragraph [0082] * | 8,9 | **TECHNICAL FIELDS SEARCHED (IPC)** <br> H04L |

-/--

The present search report has been drawn up for all claims

| Place of search | Date of completion of the search | Examiner |
|---|---|---|
| The Hague | 16 November 2011 | Moreno, Marta |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 11 30 5871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MOTOROLA: "SCF-based COMP: Iterative Scheduler Algorithm and Performance Gain over Single-Point SU/MU Beamforming", 3GPP DRAFT; R1-093963 SCF BASED COBF AND RESULTS -FINAL, 3RD GENERATION PARTNERSHIP PROJECT (3GPP), MOBILE COMPETENCE CENTRE, 12 October 2009 (2009-10-12), XP050388458, France [retrieved on 2009-10-06] * page 3, paragraph 3 * * page 6, paragraph 3 - paragraph 4 * | 5,6 | |
| Y | US 2010/232356 A1 (MAHESHWARI SHAILESH [US] ET AL) 16 September 2010 (2010-09-16) * paragraph [0010] * | 7 | |
| Y | MOTOROLA: "Coordinated Multi-Point Transmission - Exploring Possible System Operations and UE Support", 3GPP DRAFT; R1-084407 COORDINATED MULTI-POINT TRANSMISSION (MOTOROLA), 3RD GENERATION PARTNERSHIP PROJECT (3GPP), MOBILE COMPETENCE CENTRE, 5 November 2008 (2008-11-05), XP050317669, France [retrieved on 2008-11-05] * page 3, paragraph 2 * | 2,4 | TECHNICAL FIELDS SEARCHED (IPC) |
| Y | WO 2011/028583 A1 (NTT DOCOMO INC [JP]; RAMPRASHAD SEAN A [US]; PAPADOPOULOS HARALABOS C) 10 March 2011 (2011-03-10) * paragraph [0057] * * paragraph [0067] - paragraph [0071] * | 11 | |

The present search report has been drawn up for all claims

| Place of search | Date of completion of the search | Examiner |
|---|---|---|
| The Hague | 16 November 2011 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 11 30 5871

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2011

| Patent document cited in search report | | Publication date | Patent family member(s) | | Publication date |
|---|---|---|---|---|---|
| EP 2169888 | A1 | 31-03-2010 | CN | 101719883 A | 02-06-2010 |
| | | | EP | 2169888 A1 | 31-03-2010 |
| | | | JP | 2010088116 A | 15-04-2010 |
| | | | US | 2010087151 A1 | 08-04-2010 |
| US 2006013338 | A1 | 19-01-2006 | AU | 2005274990 A1 | 23-02-2006 |
| | | | BR | PI0513411 A | 06-05-2008 |
| | | | CA | 2574065 A1 | 23-02-2006 |
| | | | CN | 101834813 A | 15-09-2010 |
| | | | EP | 1774742 A1 | 18-04-2007 |
| | | | EP | 2257014 A2 | 01-12-2010 |
| | | | EP | 2257015 A2 | 01-12-2010 |
| | | | EP | 2257016 A2 | 01-12-2010 |
| | | | EP | 2257017 A2 | 01-12-2010 |
| | | | JP | 2008507213 A | 06-03-2008 |
| | | | JP | 2011103653 A | 26-05-2011 |
| | | | KR | 20070028617 A | 12-03-2007 |
| | | | KR | 20080100855 A | 19-11-2008 |
| | | | SG | 155226 A1 | 30-09-2009 |
| | | | US | 2006013338 A1 | 19-01-2006 |
| | | | WO | 2006020021 A1 | 23-02-2006 |
| US 2010232356 | A1 | 16-09-2010 | US | 2010232356 A1 | 16-09-2010 |
| | | | WO | 2010107708 A2 | 23-09-2010 |
| WO 2011028583 | A1 | 10-03-2011 | US | 2011055653 A1 | 03-03-2011 |
| | | | WO | 2011028583 A1 | 10-03-2011 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. HOEHER ; S. KAISER ; P. ROBERTSON.** Two-dimensional pilot-symbol-aided channel estimation by Wiener filtering. *IEEE International Conference on Acoustics, Speech, and Signal Processing ICASSP-97,* 21 April 1997, vol. 3, 1845-1848